# EUROPEAN PATENT APPLICATION

(11) **EP 2 615 429 A1**
(43) Date of publication of application: **17.07.2013**
(21) Application number: 11823380.8
(22) Date of filing: 16.08.2011
(51) Int. Cl.: G01F 1/684

(54) **THERMAL TYPE FLUID FLOW RATE MEASURING DEVICE**

(30) Priority: 08.09.2010 JP 2010200451
(71) Applicant: Hitachi Automotive Systems, Ltd., Hitachinaka-shi Ibaraki 312-8503 (JP)
(72) Inventor: HIO Masayuki, Hitachinaka-shi Ibaraki 312-8503 (JP); MORINO Takeshi, Hitachinaka-shi Ibaraki 312-8503 (JP); OKAMOTO Yuuki, Hitachinaka-shi Ibaraki 312-8503 (JP)
(74) Representative: MERH-IP Matias Erny Reichl Hoffmann
(86) International application number: PCT/JP2011/068544
(87) International publication number: WO 2012/032901

(57) **Abstract**

Provided is a thermal fluid flow rate measurement device that inhibits the thermal fluid flow rate measurement device and peripheral parts from thermally affecting an intake air temperature detection element and measures an intake air temperature with high accuracy. The thermal fluid flow rate measurement device includes an auxiliary passage 8 that is inserted into a main passage 2 to acquire a part of an air flow 7 in the main passage, a base member 5 that forms a part of the auxiliary passage, a flow rate detection element 11 that is supported by the base member and disposed in the auxiliary passage to detect the flow rate of a fluid, and a circuit section 10 that is electrically connected to the flow rate detection element and housed in a circuit chamber 21 formed by a mold member 4 which is a part of the auxiliary passage. An intake air temperature detection element 9 is disposed outside the auxiliary passage and mounted on an upstream end face of the mold member relative to the air flow to detect the intake air temperature.

## Description

### Technical Field

The present invention relates to a thermal fluid flow rate measurement device, and more particularly to a thermal fluid flow rate measurement device suitable for measuring intake air of an internal combustion engine.

### Background Art

A thermal fluid flow rate measurement device is disposed in an electronically controlled fuel injection device of an internal combustion engine for automobiles and the like and used to measure an intake air amount. In recent years, the thermal fluid flow rate measurement device mostly includes an auxiliary passage in which a part of fluid flows. An intake air temperature detection element and a flow rate detection element, such as a temperature-sensitive resistor, are disposed in the auxiliary passage. In a previously developed thermal fluid flow rate measurement device, an intake air temperature detection element is disposed in the auxiliary passage to measure the temperature of ambient air as described in Japanese Unexamined Patent Application Publication No. 2006-234766.

### Citation List

### Patent Literature

Patent Literature 1: Japanese Unexamined Patent Application Publication No. 2006-234766

### Summary of Invention

### Technical Problem

As mentioned above, the intake air temperature detection element for a conventional thermal fluid flow rate measurement device is disposed in the auxiliary passage. When the intake air temperature detection element is disposed in the auxiliary passage, an intake temperature in the auxiliary passage can be accurately measured. However, air comes into contact with the intake air temperature detection element and disturbs the flow of air in the auxiliary passage. This makes it impossible to accurately measure the intake air amount.

Further, if the intake air temperature detection element is disposed outside the auxiliary passage, the intake air temperature detection element is easily affected by ambient heat, such as the heat radiated from a heated intake pipe or from a heated circuit in the device. When the intake air temperature detection element is affected by such ambient heat, the intake air temperature cannot be accurately measured.

Furthermore, an assembly worker, for example, may inadvertently come into contact with the intake air temperature detection element to adversely affect its accuracy.

Moreover, the effective cross-sectional area in the intake pipe that is occupied by the intake air temperature detection element may increase depending on its mounting position. Therefore, the position in which the intake air temperature detection element can be mounted without increasing the loss of pressure is limited.

The present invention has been made in view of the above circumstances and has an object to provide a thermal fluid flow rate measurement device capable of avoiding a disordered air flow in the auxiliary passage due to the mounting of the intake air temperature detection element and measuring the intake air temperature with high accuracy. Solution to Problem

In accomplishing the above object, according to one aspect of the present invention, there is provided a thermal fluid flow rate measurement device including an auxiliary passage, a base member, a flow rate detection element, and a circuit section. The auxiliary passage is inserted into a main passage to acquire a part of an air flow in the main passage. The base member forms a part of the auxiliary passage. The flow rate detection element is supported by the base member and disposed in the auxiliary passage to detect the flow rate of a fluid. The circuit section is electrically connected to the flow rate detection element and housed in a circuit chamber formed by a mold member that is a part of the auxiliary passage. An intake air temperature detection element is disposed outside the auxiliary passage and mounted on an upstream end face of the mold member relative to the air flow to detect an intake air temperature. Advantageous Effects of Invention

The present invention inhibits a fluid flow rate measurement device and peripheral parts from thermally affecting an intake air temperature detection element and measures an intake air temperature with high accuracy. The present invention also prevents the flow of air in an auxiliary passage from being disordered when the intake air temperature detection element is installed.

### Brief Description of Drawings

Fig. 1 is a front view illustrating an embodiment of a thermal fluid flow rate measurement device according to the present invention.
Fig. 2 is a cross-sectional view taken along the line A-A of Fig. 1.
Fig. 3 is a cross-sectional view taken along the line B-B of Fig. 1.
Fig. 4 shows the thermal fluid flow rate measurement device.
Fig. 5 is an enlarged view of a dent.

### Description of Embodiments

An embodiment of the present invention will now be described with reference to the accompanying drawings.

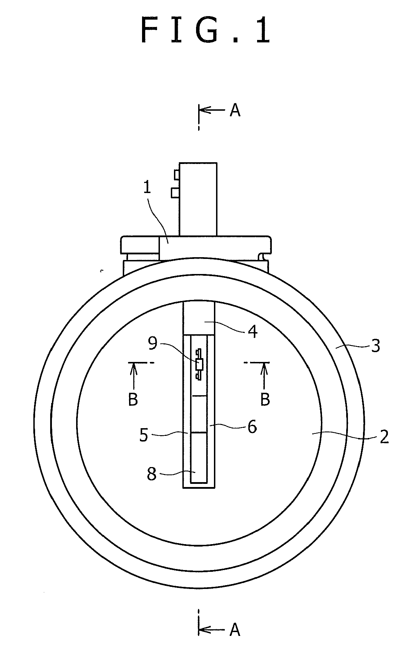

Fig. 1 is a diagram illustrating how a thermal fluid flow rate measurement device 1 is mounted on a body 3.

The thermal fluid flow rate measurement device 1 is inserted into the body 3, which forms a main passage 2. The thermal fluid flow rate measurement device 1 includes a mold member 4, a base member 5, and a cover member 6. These members form an auxiliary passage 8 that takes in a part of an air flow 7 in the main passage 2.

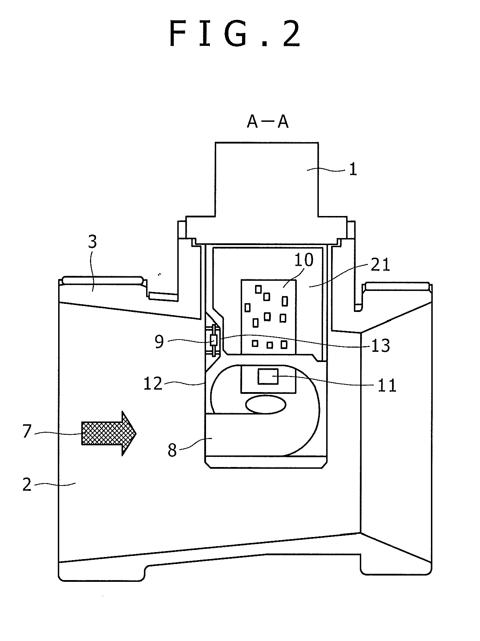

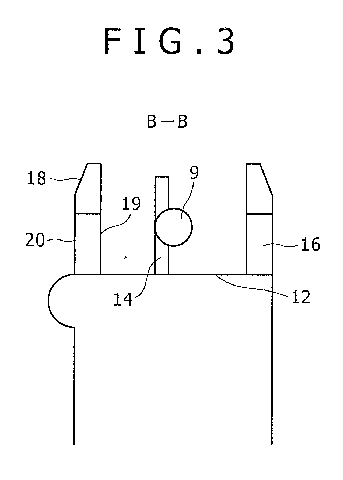

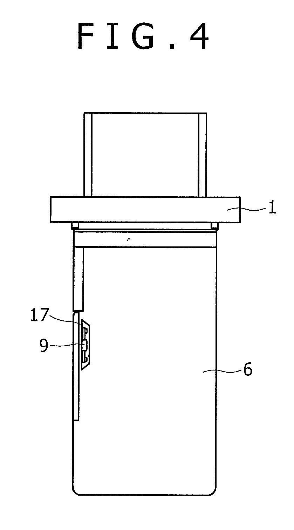

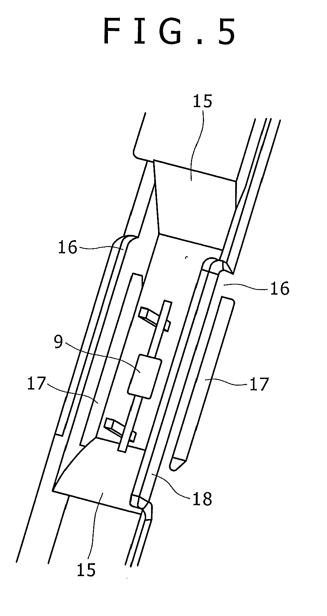

Fig. 2 is a cross-sectional view taken along the line A-A of Fig. 1. Fig. 3 is a cross-sectional view taken along the line B-B of Fig. 1. Fig. 4 shows the thermal fluid flow rate measurement device 1. Fig. 5 is an enlarged view of a dent 13 in which an intake air temperature detection element 9 is mounted.

A circuit section 10 and a flow rate detection element 11, which are supported by the base member 5, are disposed in the thermal fluid flow rate measurement device 1. The circuit section 10 is housed in a circuit chamber 21, which is a space formed by the mold member 4. The flow rate detection element 11 is disposed in the auxiliary passage 8. The flow rate detection element 11 is electrically connected to the circuit section 10, for instance, by wire bonding.

The auxiliary passage 8 takes in a part of the air flow 7 in the main passage 2 from an inlet that is open upstream of the air flow 7. As shown in Fig. 2, a fluid flowing inward from the inlet changes its flow direction by 180 degrees before it reaches the flow rate detection element 11. As such a configuration is employed, dust, contaminants, water, and other substances included in the fluid collide against a wall of the auxiliary passage 8 and lose their kinetic energy. This significantly reduces the possibility of such substances directly colliding against the flow rate detection element 11. As a result, the reliability of the thermal fluid flow rate measurement device 1 increases.

Further, as, for example, variable valve timing is recently employed for an engine, the air flow 7 in the main passage 2 is not always stable but is pulsating. In some cases, a back-flow occurs so that air flow from the engine.

Under such circumstances, the use of the auxiliary passage 8 is effective for accurate flow rate detection. More specifically, the flow rate can be accurately detected by forming an outlet (not shown) for the back-flow side and using the auxiliary passage 8 that should preferably be symmetrical in both upstream and downstream directions.

If, in the above instance, the intake air temperature detection element 9 is disposed in a region facing the auxiliary passage 8, the air flow taken into the auxiliary passage 8 strikes against the intake air temperature detection element 9 and becomes disordered. This decreases the accuracy of air flow rate detection by the flow rate detection element 11.

As such being the case, the thermal fluid flow rate measurement device 1 includes the dent 13 that is positioned near the circuit section 10 and the flow rate detection element 11, disposed on an upstream end face 12, and concaved in the downstream direction. The intake air temperature detection element 9 is disposed in a space that is vertically extended from the upstream end face 12 of the dent 13.

Hence, as the intake air temperature detection element 9 is disposed outside the auxiliary passage 8 although it was previously disposed in the auxiliary passage 8, the air flow, which becomes disordered as it strikes against the intake air temperature detection element 9, does not reach the flow rate detection element 11 disposed in the auxiliary passage 8. This makes it possible to accurately detect the air flow 7 in the main passage 2.

Further, as the intake air temperature detection element 9 is disposed near the flow rate detection element 11, it is possible to measure an air temperature that is substantially equal to the temperature of air reaching the flow rate detection element 11. Therefore, accurate temperature correction can be made. Consequently, flow rate detection can be achieved with increased accuracy.

Furthermore, as the intake air temperature detection element 9 is disposed on the upstream end face 12, the heat radiated from the mold member 4, base member 5, cover member 6, and circuit section 10 of the thermal fluid flow rate measurement device 1 is conveyed downstream by the air flow 7. This makes it possible to avoid the thermal influence of the above members. Consequently, intake air temperature detection can be achieved with high accuracy.

Moreover, as the intake air temperature detection element 9 is disposed near the circuit section 10, a terminal 14 connecting the circuit section 10 to the intake air temperature detection element 9 can be relatively shortened. This not only provides increased manufacturing accuracy but also achieves material cost reduction. As a result, the overall cost can be reduced.

The dent 13 is formed by the mold member 4, the base member 5, and the cover member 6. The mold member 4 for the dent 13 has a slope (narrowed downstream of the air flow) 15. As the slope 15 increases the speed of air flowing in the dent 13, the intake air temperature detection element 9 is not easily affected by heat radiated from the surroundings.

The base member 5 and cover member 6 for the dent 13 are each provided with a rib 16. Each rib 16 increases the rigidity of the thermal fluid flow rate measurement device 1. In addition, the dent 13 is surrounded by each rib 16 to prevent, for example, an assembly worker from inadvertently come into contact with the intake air temperature detection element 9.

There is a through-hole 17 in each rib 16. The air reaching the dent 13 passes through the through-hole 17 and becomes discharged to the main passage 2. This facilitates the flow of air in the dent 13 so that the intake air temperature detection element 9 is not easily affected by heat radiated from the surroundings.

Further, the upstream portion of each rib 16 for the base member 5 and for the cover member 6 has a chamfer 18 that is oriented from the center of the device to the outside of the device. This ensures that the air flowing outside of the rib 20 is higher in speed than the air flowing inside of the rib 19. Therefore, the air flowing outside of the rib 20 is lower in pressure than the air flowing inside of the rib 19. In other words, a pressure difference arises between the air flowing inside of the rib 19 and the air flowing outside of the rib 20. This pressure difference urges the air to become discharged from the inside of the rib 19 to the outside of the rib 20 through the through-hole 17. Consequently, the flow of air in the dent 13 is facilitated so that the intake air temperature detection element 9 is not easily affected by heat radiated from the surroundings.

### Industrial Applicability

The present invention is applicable not only to the thermal fluid flow rate measurement device according to the above-described embodiment, but also to various other measurement devices such as a temperature measurement device, a humidity measurement device, and a gas measurement device.

**List of Reference Signs**

| | |
|---|---|
| 1 | Thermal fluid flow rate measurement device |
| 2 | Main passage |
| 3 | Body |
| 4 | Mold member |
| 5 | Base member |
| 6 | Cover member |
| 7 | Air flow |
| 8 | Auxiliary passage |
| 9 | Intake air temperature detection element |
| 10 | Circuit section |
| 11 | Flow rate detection element |
| 12 | Upstream end face |
| 13 | Dent |
| 14 | Terminal |
| 15 | Slope |
| 16 | Rib |
| 17 | Through-hole |
| 18 | Chamfer |
| 19 | Inside of rib |
| 20 | Outside of rib |
| 21 | Circuit chamber |

## Claims

1. A thermal fluid flow rate measurement device comprising:
an auxiliary passage that is inserted into a main passage to acquire a part of an air flow in the main passage;
a base member that forms a part of the auxiliary passage;
a flow rate detection element that is supported by the base member and disposed in the auxiliary passage to detect the flow rate of a fluid; and
a circuit section that is electrically connected to the flow rate detection element and housed in a circuit chamber formed by a mold member which is a part of the auxiliary passage;
wherein an intake air temperature detection element is disposed outside the auxiliary passage and mounted on an upstream end face of the mold member relative to the air flow to detect an intake air temperature.

2. The thermal fluid flow rate measurement device according to claim 1, wherein the intake air temperature detection element is disposed in a dent that is mounted on an upstream end face of the mold member relative to the air flow and concaved in the downstream direction of the air flow.

3. The thermal fluid flow rate measurement device according to claim 1, wherein the intake air temperature detection element is disposed near the circuit section.

4. The thermal fluid flow rate measurement device according to claim 1, wherein the intake air temperature detection element is disposed near the flow rate detection element.

5. The thermal fluid flow rate measurement device according to claim 2, wherein the dent is narrowed downstream of the air flow.

6. The thermal fluid flow rate measurement device according to claim 2, wherein the intake air temperature detection element disposed in the dent is surrounded by the base member and by a cover member forming a part of the auxiliary passage.

7. The thermal fluid flow rate measurement device according to claim 6, wherein at least one through-hole is provided in a portion of the base member and of the cover member that surrounds the intake air temperature detection element.

8. The thermal fluid flow rate measurement device according to claim 7, wherein at least one chamfer is provided on a portion of the base member and of the cover member that surrounds the intake air temperature detection element.

9. The thermal fluid flow rate measurement device according to claim 8, wherein the chamfer is provided so that the air flow moves outside of the base member and of the cover member.
